# NOUVEAU FASCICULE DE BREVET EUROPEEN

(11) **EP 2 197 699 B2**
(45) Date de publication et mention de la décision concernant l'opposition: **05.09.2018**
(45) Mention de la délivrance du brevet: 30.11.2011
(21) Numéro de dépôt: 08842311.6
(22) Date de dépôt: 01.10.2008
(51) Int. Cl.: B60H 3/06

(54) **SYSTEME DE CHAUFFAGE/CLIMATISATION A REGENERATION DE FILTRE POUR VEHICULE AUTOMOBILE ET PROCEDE DE CONTROLE ET FILTRE ASSOCIES**
HEIZ-/KLIMAANLAGE MIT FILTERREGENERIERUNG FÜR EIN KRAFTFAHRZEUG UND ZUGEORDNETES STEUERVERFAHREN UND ZUGEORDNETER FILTER
HEATING/AIR-CONDITIONING SYSTEM WITH FILTER REGENERATION FOR A MOTOR VEHICLE, AND ASSOCIATED CONTROL METHOD AND ASSOCIATED FILTER

(30) Priorité: 08.10.2007 FR 0758122
(43) Date de publication de la demande: 23.06.2010
(73) Titulaire: Renault S.A.S., 92100 Boulogne-Billancourt (FR)
(72) Inventeur: BOUAMRA, Kahina, F-91300 Massy (FR); YOUSSEF, Joseph, F-91120 Palaiseau (FR)
(86) Numéro de dépôt international: PCT/FR2008/051774
(87) Numéro de publication internationale: WO 2009/053577

(56) Documents cités:
- EP-A- 1 514 710
- DE-A1-102004 040 858
- US-A1- 2005 142 047
- US-A1- 2005 166 583
- US-A1- 2007 227 107
- US-B1- 7 037 871

## Description

La présente invention concerne un système de chauffage/climatisation pour véhicule automobile ainsi qu'un procédé de contrôle de ce système en vue de la régénération du filtre.

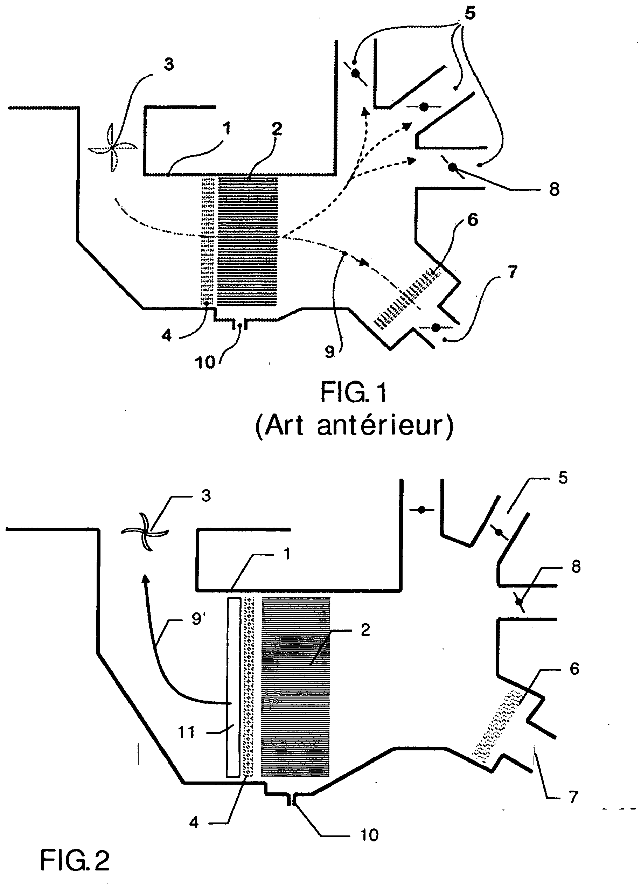

Un système connu de chauffage/climatisation est représenté sous forme schématique sur la figure 1. Un tel système comporte classiquement un boîtier 1 formant un conduit pour la circulation de l'air entre l'extérieur du véhicule et l'intérieur de l'habitacle, à l'intérieur duquel sont disposés un évaporateur 2, un pulseur d'air ou groupe moto ventilateur 3, un filtre à particules 4 combiné (par exemple à charbon actif), et un aérotherme 6. Un tel système ne peut être mis en fonctionnement qu'après la mise sous contact du véhicule automobile (position APC du bouton de démarrage). En mode de refroidissement, l'air est aspiré depuis l'extérieur du véhicule par le pulseur d'air 3, refroidi par le passage au travers de l'évaporateur 2, puis acheminé, selon les trajets représentés en pointillés vers une ou plusieurs sorties d'aération 5, débouchant ou non à l'intérieur de l'habitacle selon la position de volets de commutation 8 placés au niveau de chacune des sorties. Les condensats générés par le refroidissement de l'air sont récupérés dans une zone du boîtier 1 placée en partie basse de l'évaporateur 2, et munie d'une sortie 10 débouchant sur l'extérieur du boîtier pour permettre l'évacuation de ces condensats. En mode de chauffage, l'évaporateur 2 est désactivé, et l'air est acheminé, toujours grâce au pulseur 3, selon le trajet 9 vers une sortie d'aération 7, l'air étant chauffé par son passage au travers de l'aérotherme 6. Là encore, un volet d'obturation placé au niveau de la sortie d'aération 7 permet à l'air chauffé d'arriver ou non à l'intérieur de l'habitacle, selon sa position. Les différents modes de fonctionnement du système sont déclenchés par un module de contrôle (non représenté) comprenant un microcontrôleur commandant la mise sous tension ou hors tension du pulseur d'air 3, de l'aérotherme 6 et/ou de l'évaporateur 2 selon le mode de fonctionnement sélectionné par l'utilisateur.

Dans les deux modes de fonctionnement, le filtre 4, placé de préférence en amont de l'évaporateur 2 en suivant le sens de circulation de l'air, sert à retenir les particules et les polluants gazeux du type COV (Composés Organiques Volatiles) qui peuvent être présents dans l'air provenant de l'extérieur du véhicule, de façon à filtrer les différents polluants avant de permettre à l'air refroidi ou chauffé de pénétrer dans l'habitacle. Les filtres à adsorbant actuellement utilisés dans les systèmes de chauffage/climatisation sont généralement des filtres à charbon actif, ou des filtres combinés (charbon actif/filtre à pollen).

De tels filtres à charbon actif ne sont cependant pas suffisamment efficaces pour permettre l'adsorption de tous les polluants gazeux. De plus, ils ont une durée de vie limitée et doivent être changés régulièrement. Les possibilités connues de régénération de tels filtres sont des solutions coûteuses consistant à chauffer les filtres à des températures élevées, typiquement de l'ordre de 80°, sous un flux d'air pour faciliter le phénomène de désorption. Enfin, de tels filtres voient leur efficacité réduite en présence de vapeur d'eau, et donc notamment lorsque le système est dans le mode de refroidissement du fait de la présence de l'évaporateur.

Pour pallier notamment le problème de réduction d'efficacité des filtres à charbon actif, le document EP 1 514 710 propose un système de chauffage/climatisation combinant un système de filtration électrostatique composé d'une partie ionisante et d'une partie collectrice de type filtre à particules, avec un système de plasma catalyse composé d'un générateur de plasma placé en amont de l'évaporateur dans le sens de circulation de l'air depuis l'extérieur du véhicule vers l'intérieur de l'habitacle, et d'un catalyseur placé à l'intérieur de l'évaporateur ou en aval de ce dernier. Selon ce système, le générateur de plasma froid associé au catalyseur permet de traiter efficacement les mauvaises odeurs de l'air circulant dans le système de chauffage/climatisation en fonctionnement.

Un tel système ne permet cependant pas la régénération des filtres à particules utilisés.

La présente invention a pour but de proposer un système de chauffage/climatisation intégrant le traitement du filtre à adsorbants en vue de sa régénération, de manière fiable et efficace, sans risque pour la santé.

Ce but est atteint selon l'invention qui propose un système de chauffage/climatisation pour véhicule automobile, comportant toutes les caractéristiques de la revendication 1.

Ainsi, l'invention propose de combiner l'utilisation d'une zéolithe qui est un matériau à coefficient d'adsorption beaucoup plus élevé que le charbon actif, et d'un générateur de plasma qui va générer par nature de l'ozone, laquelle va oxyder les polluants piégés sur le filtre et permettre ainsi sa régénération.

La présente invention a également pour objet un procédé de contrôle d'un système de chauffage/climatisation pour véhicule automobile, comportant un boîtier formant un conduit pour la circulation de l'air entre l'extérieur du véhicule et une pluralité d'ouvertures d'aération débouchant à l'intérieur de l'habitacle, à l'intérieur duquel sont disposés au moins un pulseur d'air, un évaporateur, et un générateur de plasma, le système comportant en outre un module de contrôle apte à déclencher le fonctionnement du pulseur d'air et de l'évaporateur lorsque le système est dans un premier mode dit de refroidissement pour permettre de refroidir l'air s'écoulant dans le conduit depuis l'extérieur vers l'intérieur de l'habitacle, ainsi qu'un filtre à adsorbants, le procédé étant caractérisé en ce que, le filtre comprenant des zéolithes régénérables par ozone, et le générateur de plasma étant placé au plus près dudit filtre, il contrôle, via le module de contrôle le fonctionnement du système en un mode dit de régénération dudit filtre selon les étapes suivantes :
- détection de la mise hors contact du véhicule automobile ;
- déclenchement du fonctionnement du générateur de plasma.

D'autres caractéristiques, qui seront décrites dans la suite, peuvent être avantageusement ajoutées au système selon l'invention pour notamment réduire la consommation électrique du système pendant son fonctionnement en mode d'assainissement, et/ou pour renforcer la sécurité sanitaire.

Les différents aspects de l'invention et les avantages qu'elle procure seront mieux compris au vu de la description suivante faite en référence aux figures annexées, dans lesquelles :
- la figure 1, déjà décrite, illustre sous forme schématique un système de chauffage/climatisation standard ;
- la figure 2, illustre sous forme également schématique, un système de chauffage/climatisation préféré conforme à la présente invention, vu en coupe, dans son fonctionnement en mode de régénération de filtre ;
- la figure 3 illustre les composantes d'un générateur de plasma ;
- la figure 4 représente schématiquement la forme d'un filtre possible pour un système de chauffage/climatisation conformément à l'invention ;
- la figure 5 représente une première forme de réalisation possible d'un générateur de plasma pour un système de chauffage/climatisation conforme à l'invention ;
- la figure 6 représente une deuxième forme de réalisation possible d'un générateur de plasma pour un système de chauffage/climatisation conforme à l'invention ;
- la figure 7 représente une troisième forme de réalisation possible d'un générateur de plasma pour un système de chauffage/climatisation conforme à l'invention.

Pour simplifier la compréhension, les éléments communs aux différentes figures portent les mêmes références.

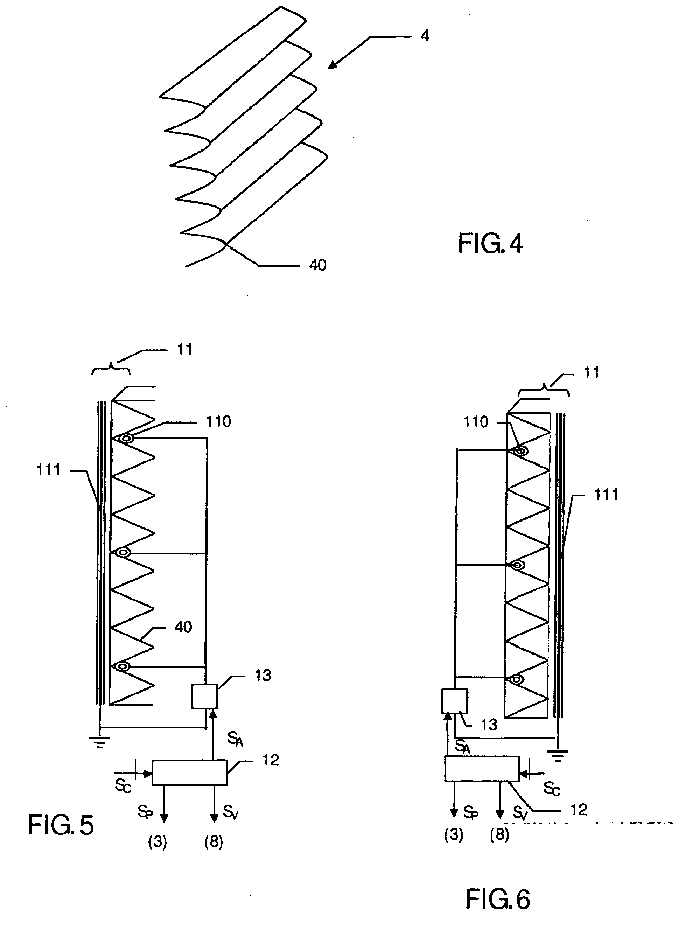

Sur la figure 2, qui illustre schématiquement un système selon un mode de réalisation préféré de l'invention, on retrouve les éléments d'un système de chauffage/climatisation standard tel que celui représenté sur la figure 1. Ainsi, le système selon l'invention comporte classiquement un boîtier 1 qui forme un conduit pour la circulation de l'air entre l'extérieur du véhicule et une pluralité d'ouvertures d'aération 5, 7 débouchant à l'intérieur de l'habitacle. Pour permettre le fonctionnement du système selon au moins un premier mode de refroidissement, le système comporte en outre, disposés à l'intérieur du boîtier 1, un pulseur d'air 3 et un évaporateur 2. Le système dispose également d'un module de contrôle 12 (voir figures 5 à 7), qui, pour le fonctionnement classique du système en mode de refroidissement, est apte à déclencher le pulseur d'air 3 et l'évaporateur 2 de façon à permettre d'une part, la création d'une circulation d'air s'écoulant dans le conduit depuis l'extérieur vers l'intérieur de l'habitacle, et d'autre part, le refroidissement de cet air avant qu'il ne pénètre dans l'habitacle.

Le système peut comporter en outre, à l'intérieur du boîtier 1, un aérotherme 6 dont le fonctionnement est également déclenché par le module de contrôle 12 lorsque le système est dans un deuxième mode de fonctionnement classique de chauffage, pour chauffer l'air dans le conduit avant qu'il ne pénètre dans l'habitacle.

Selon l'invention, le filtre 4 à particules utilisé comporte des zéolithes régénérables par ozone, éventuellement associées à d'autres adsorbants tels que le charbon actif, et le système comporte également un générateur de plasma 11 placé au plus près du filtre 4. Ce générateur de plasma va servir à régénérer le filtre 4. En effet, conformément à l'invention, le module de contrôle 12 est en outre apte à initialiser, sur réception d'un signal de commande S_{C} (voir figures 5 à 7), généré lorsque le véhicule automobile n'est plus sous contact, un mode de fonctionnement dit de régénération du filtre 4 du système. Dans ce mode de fonctionnement particulier, le module de contrôle 12 va déclencher le fonctionnement du générateur de plasma 11. Le signal de déclenchement du générateur de plasma 11 est désigné par la référence SA sur les figures 5 à 7 qui seront décrites ultérieurement. Ce générateur de plasma va ainsi générer des radicaux libres, dont l'ozone, qui vont venir se déposer sur le filtre et oxyder les polluants préalablement piégés par le filtre lors du fonctionnement du système en mode de refroidissement ou de chauffage.

Pour faciliter la désorption du filtre 4, on génère un flux d'air pendant le cycle d'assainissement, inversé par rapport au flux d'air classique pour éviter que les particules ne se retrouvent dans l'habitacle. Pour ce faire, le module de contrôle 12 va générer un signal S_{P} (figures 5 à 7) de commande du pulseur d'air 3 de façon à permettre un écoulement de l'air dans le conduit depuis l'intérieur de l'habitacle vers l'extérieur du véhicule, selon le trajet 9' représenté sur la figure 2. Cela peut être réalisé par exemple en prévoyant que le moteur du pulseur d'air 3 puisse être entraîné en rotation inverse par rapport à la rotation utilisée en mode de refroidissement et/ou de chauffage. Cela peut être également réalisé à l'aide d'un petit propulseur supplémentaire qui permet d'inverser le flux d'air.

Pour éviter des surconsommations inutiles d'énergie sur la batterie du véhicule, on évitera de préférence de faire fonctionner le pulseur d'air 3 pendant toute la durée du cycle de régénération. On peut notamment prévoir que le module de contrôle 12 ne commandera le fonctionnement du pulseur d'air 3 qu'en fin du mode de régénération.

Comme cela a été indiqué précédemment, le mode de régénération n'est déclenché que si une mise hors contact du véhicule automobile a été détectée au préalable, ce qui correspond normalement à une situation dans laquelle il n'y a théoriquement plus personne dans l'habitacle. Il est en effet important d'éviter de mettre le générateur de plasma en fonctionnement alors qu'une personne est encore dans l'habitacle du véhicule car l'ozone générée par le plasma ainsi que d'autres sous produits, peuvent être dangereux pour la santé.

On peut néanmoins renforcer encore la sécurité en prévoyant de coupler le système à d'autres systèmes ou dispositifs qui peuvent déjà être présents à d'autres fins sur le véhicule.

Notamment, il est possible de prévoir que le mode régénération ne puisse être initié tant qu'une condamnation centralisée des ouvrants du véhicule n'a pas été détectée.

En variante ou en complément, le module de contrôle 12 peut être adapté pour recevoir un signal d'un dispositif de détection de présence d'un être vivant à l'intérieur de l'habitacle, et pour empêcher le fonctionnement du générateur de plasma 11, en cas de détection de présence d'un être vivant.

En variante ou en complément, le module de contrôle 12 pourrait commander automatiquement la fermeture de volets d'obturation 8 disposés au niveau des ouvertures d'aération 5, 7 au moins pendant la durée de fonctionnement du générateur de plasma 11 (voir signal de commande S_{V} sur les figures).

En variante, on pourrait envisager que le système entre automatiquement en mode de régénération au bout d'un certain temps après commande manuelle par l'utilisateur du véhicule.

Le générateur de plasma 11 utilisé est de préférence du type à Décharge à Barrière Diélectrique. On rappelle qu'une Décharge à Barrière Diélectrique est obtenue en appliquant un signal de haute tension, de type impulsionnel ou sinusoïdal, aux bornes de deux électrodes faiblement espacées, dont l'une est recouverte d'un matériau diélectrique. Comme cela a été indiqué précédemment, ce générateur doit être situé au plus près du filtre qu'il doit régénérer. On peut donc prévoir de le positionner juste avant le filtre, comme cela est représenté schématiquement sur la figure 2, le générateur s'étendant dans un plan parallèle au plan du filtre 4. En variante, on pourrait placer le générateur de plasma juste après ce même filtre, en amont de l'évaporateur 2.

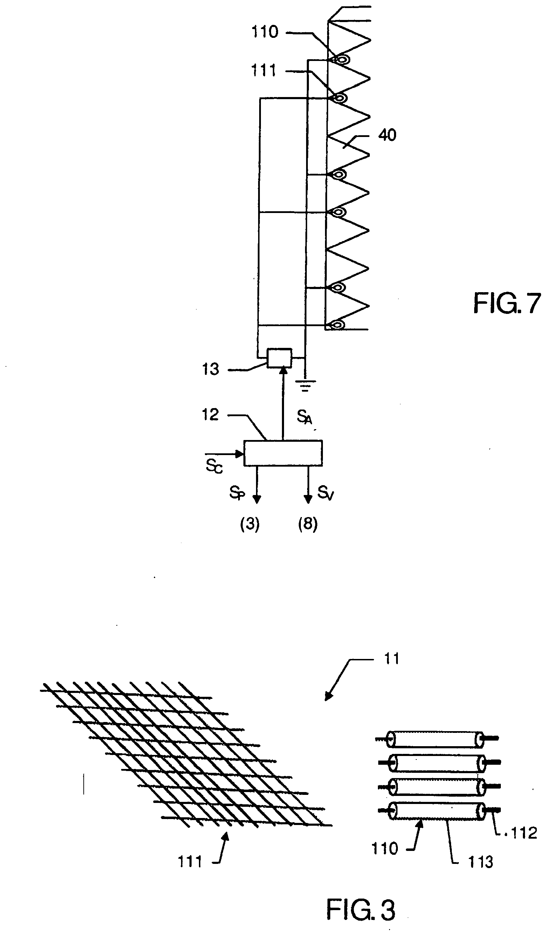

Pour les deux variantes précédentes, comme illustré sur la figure 3, le générateur plasma 11 est composé essentiellement par l'association d'une série d'électrodes 110 haute tension disposées parallèlement, et d'une grille métallique 111 formant l'électrode de masse, s'étendant dans un plan parallèle au plan contenant les électrodes haute tension. Le choix d'une grille ajourée comme plan de masse est ici rendu nécessaire pour optimiser l'effet de masse, sans pour autant empêcher le passage de l'air dans le système de chauffage/climatisation. Chaque électrode haute tension 110 est un fil conducteur 112 enrobé par un diélectrique cylindrique 113. Pour une efficacité optimale, on peut choisir d'empiler le plus grand nombre possible d'électrodes haute tension de manière à ce qu'elles soient en regard de la plus grande surface possible du filtre à régénérer. Néanmoins, on peut aussi choisir un nombre réduit d'électrodes, à partir du moment où elles sont judicieusement placées. On peut par exemple prévoir seulement trois électrodes, une première électrode s'étendant parallèlement à la surface d'une zone inférieure du filtre, une deuxième électrode s'étendant parallèlement à la surface d'une zone supérieure du filtre, et une troisième électrode s'étendant parallèlement à la surface d'une zone centrale du filtre. L'espace entre le plan contenant les électrodes haute tension 110 et l'électrode de masse 111, ne doit pas être trop important, typiquement de l'ordre de quelques millimètres, pour éviter d'une part, d'entraîner un surcoût énergétique, et d'autre part, d'occuper une place trop important dans le système. Dans une autre variante non représentée, la grille métallique 111 pourrait être remplacée par des électrodes de masse constituée chacune d'un fil conducteur relié électriquement à la masse et entouré d'une gaine isolante, chaque électrode de masse étant placée dans le même plan que les électrodes de haute tension, entre deux électrodes de haute tension.

Outre les deux variantes précédentes préconisant un générateur de plasma en amont ou en aval du filtre, une troisième possibilité préférée consiste à prévoir un tel générateur de plasma directement intégré au filtre. Ainsi, non seulement l'efficacité de la régénération est accrue du fait de la proximité immédiate du plasma, mais de plus, l'encombrement est optimisé. En outre, la génération de plasma à l'intérieur même du filtre va également favoriser l'assèchement de ce filtre et réduire la concentration d'eau. Des exemples d'intégration vont à présent être décrits pour un filtre particulier dont la forme est représentée schématiquement sur la figure 4.

Un tel filtre 4 comporte classiquement un empilement de tissus, par exemple deux tissus entre lesquels le matériau adsorbant, ici des zéolithes régénérables par ozone, est placé. Pour augmenter la surface active du filtre tout en limitant son encombrement, il est connu de prévoir de replier les tissus en formant plusieurs plis 40. Cette géométrie particulière de filtres à plis va ici être avantageusement utilisée pour offrir une intégration optimisée d'un générateur de plasma 11.

Trois modes de réalisation possibles d'un filtre à générateur de plasma intégré, du type DBD (Décharge à Barrière Electrique) vont à présent être décrits en référence aux figures 5 à 7.

Sur la figure 5 représentant schématiquement un premier mode de réalisation possible d'un filtre à plis intégrant le générateur de plasma 11, trois électrodes 110 connectées à générateur de haute tension 13 ont été judicieusement placées dans les zones respectivement supérieure, centrale et inférieure du filtre 4, entre deux plis successifs 40 de ce filtre. On retrouve par ailleurs la grille métallique 111 formant électrodes de masse. Dans cette configuration, les tissus composant le filtre sont positionnés entre les électrodes de haute tension 110 et les électrodes de masse 111. Bien entendu, on pourrait prévoir de positionner des électrodes de haute tension systématiquement entre tous les plis 40.

La figure 6, représentant schématiquement un deuxième mode de réalisation possible d'un filtre à plis intégrant le générateur de plasma 11, diffère de la figure 5 en ce que la grille 11 formant masse est placée du même côté que les électrodes haute tension 110.

La figure 7 illustre un troisième mode de réalisation possible d'un filtre à plis intégrant le générateur de plasma 11, particulièrement optimisé en termes d'encombrement. Ici, la grille métallique des figures 4 et 5 a été remplacée par des électrodes de masse 111 constituée chacune d'un fil conducteur relié électriquement à la masse et entouré d'une gaine isolante, chaque électrode de masse étant placée dans le même plan que les électrodes de haute tension, entre deux électrodes de haute tension. Ainsi, une électrode haute tension 110 se retrouve entre deux plis 40 du filtre, et l'électrode de masse 111 correspondante se retrouve dans le même plan, entre les deux plis immédiatement consécutifs à ceux renfermant l'électrode haute tension.

Dans tous les modes de réalisations précédemment décrits, l'alimentation à haute tension 13 délivre des tensions comprises typiquement entre 4 et 20 kV, sous forme de signaux unipolaires ou bipolaires, impulsionnels ou sinusoïdaux.

Pour les trois figures 5 à 7, on a représenté en outre le contrôle du générateur de plasma 11 par le module de contrôle 12 comprenant un microcontrôleur.

## Revendications

1. Système de chauffage/climatisation pour véhicule automobile, comportant un boîtier (1) formant un conduit pour la circulation de l'air entre l'extérieur du véhicule et une pluralité d'ouvertures d'aération (5, 7) débouchant à l'intérieur de l'habitacle, à l'intérieur duquel sont disposés au moins un pulseur d'air (3), un évaporateur (2), et un générateur de plasma (11), le système comportant en outre un module de contrôle (12) apte à déclencher le fonctionnement du pulseur d'air (3) et de l'évaporateur (2) lorsque le système est dans un premier mode dit de refroidissement pour permettre de refroidir l'air s'écoulant dans le conduit depuis l'extérieur vers l'intérieur de l'habitacle et un filtre (4) à adsorbants en amont de l'évaporateur (2), ledit filtre comprend des zéolithes régénérables par ozone, **caractérisé en ce que** le générateur de plasma (11) est placé au plus près dudit filtre, et **en ce que** le module de contrôle (12) est apte à initialiser, lorsque le véhicule automobile n'est plus sous contact, un mode de fonctionnement dit de régénération du filtre (4) du système, dans lequel le module de contrôle (12) déclenche le fonctionnement du générateur de plasma (11)
et **en ce que** le module de contrôle (12) commande en outre ledit pulseur d'air (3) pour permettre un écoulement (9') de l'air dans ledit conduit depuis l'intérieur de l'habitacle vers l'extérieur du véhicule, au moins en fin du mode de régénération, de manière à faciliter la désorption du filtre (4).

2. Système de chauffage/climatisation selon l'une quelconque des revendications précédentes, **caractérisé en ce que** le générateur de plasma (11) est du type à Décharge à Barrière Diélectrique.

3. Système de chauffage/climatisation selon la revendication 2, **caractérisé en ce que** le générateur de plasma (11) est placé en amont ou en aval du filtre (4).

4. Système de chauffage/climatisation selon la revendication 2, **caractérisé en ce que** le générateur de plasma (11) est intégré au filtre (4).

5. Système de chauffage/climatisation selon la revendication 3 ou 4, **caractérisé en ce que** le générateur de plasma (11) comporte :
- une série d'électrodes (110) haute tension reliées électriquement à un générateur (13) de haute tension, les électrodes étant empilées parallèlement dans un plan, et
- une grille métallique (111) formant l'électrode de masse, s'étendant dans un plan parallèle au plan contenant les électrodes haute tension (110).

6. Système de chauffage/climatisation selon la revendication 3 ou 4, **caractérisé en ce que** le générateur de plasma (11) comporte :
- une série d'électrodes (110) haute tension reliées électriquement à un générateur (13) de haute tension, les électrodes étant empilées parallèlement dans un plan, et
- une série d'électrodes de masse constituée chacune d'un fil conducteur relié électriquement à la masse et entouré d'une gaine isolante, chaque électrode de masse étant placée dans le même plan que les électrodes de haute tension, entre deux électrodes de haute tension.

7. Système de chauffage/climatisation selon la revendication 5 ou 6, **caractérisé en ce que** le générateur de plasma (11) comporte au moins une première électrode haute tension s'étendant parallèlement à la surface d'une zone inférieure du filtre, une deuxième électrode haute tension s'étendant parallèlement à la surface d'une zone supérieure du filtre, et une troisième électrode haute tension s'étendant parallèlement à la surface d'une zone centrale du filtre.

8. Système de chauffage/climatisation selon l'une quelconque des revendications précédentes, **caractérisé en ce que** le module de contrôle (12) est adapté pour recevoir un signal d'un dispositif de détection de présence d'un être vivant à l'intérieur de l'habitacle, et pour empêcher le fonctionnement du générateur de plasma (11), voire du mode de régénération, en cas de détection de présence d'un être vivant.

9. Système de chauffage/climatisation selon l'une quelconque des revendications précédentes, **caractérisé en ce que** le module de contrôle (12) est apte à commander automatiquement la fermeture de volets d'obturation (8) disposés au niveau des ouvertures d'aération (5, 7) au moins pendant la durée de fonctionnement du générateur de plasma (11).

10. Procédé de contrôle d'un système de chauffage/climatisation d'un véhicule automobile, selon l'une quelconque des revendications 1 à 9, le procédé étant **caractérisé en ce qu'**il contrôle, via le module de contrôle (12) le fonctionnement du système en un mode dit de régénération dudit filtre selon les étapes suivantes :
- détection de la mise hors contact du véhicule automobile ;
- déclenchement du fonctionnement du générateur de plasma (11).

11. Procédé de contrôle selon la revendication 10, **caractérisé en ce qu'**il comporte en outre une étape de commande dudit pulseur d'air (3) pour permettre un écoulement (9') de l'air dans ledit conduit depuis l'intérieur de l'habitacle vers l'extérieur du véhicule, au moins en fin de mode de régénération.

## Patentansprüche

1. Heizungs-/Klimatisierungssystem für Kraftfahrzeug, das ein Gehäuse (1) aufweist, das eine Leitung für die Umwälzung der Luft zwischen der äußeren Umgebung des Fahrzeugs und mehreren Belüftungsöffnungen (5, 7), die in das Innere des Fahrgastraums münden, bildet, wobei in ihm wenigstens eine Luftpulsiereinrichtung (3), ein Verdampfer (2) und ein Plasmagenerator (11) angeordnet sind, wobei das System außerdem ein Steuermodul (12) umfasst, das den Betrieb der Luftpulsiereinrichtung (3) und des Verdampfers (2) beginnen kann, wenn das System in einer ersten so genannten Kühlungsbetriebsart ist, um die Kühlung von Luft zu ermöglichen, die in die Leitung von der äußeren Umgebung in das Innere des Fahrgastraums strömt, und einen Filter (4) mit Adsorptionsmitteln stromaufseitig des Verdampfers (2) umfasst, wobei der Filter durch Ozon regenerierbare Zeolithe enthält, **dadurch gekennzeichnet, dass** der Plasmagenerator (11) so nahe wie möglich bei dem Filter angeordnet ist **und dass** das Steuermodul (12) dann, wenn das Kraftfahrzeug nicht mehr eingeschaltet ist, eine so genannte Betriebsart zur Regeneration des Filters (4) des Systems beginnen kann, in der das Steuermodul (12) den Betrieb des Plasmagenerators (11) startet, **und dass** das Steuermodul (12) außerdem die Luftpulsiereinrichtung (3) steuert, um eine Strömung (9') von Luft in der Leitung von dem Inneren des Fahrgastraums zu der äußeren Umgebung des Fahrzeugs wenigstens am Ende der Regenerationsbetriebsart zu ermöglichen, derart, dass die Desorption des Filters (4) erleichtert wird.

2. Heizungs-/Klimatisierungssystem nach einem der vorhergehenden Ansprüche, **dadurch gekennzeichnet, dass** der Plasmagenerator (11) vom Typ mit Entladung mit dielektrischer Sperre ist.

3. Heizungs-/Klimatisierungssystem nach Anspruch 2, **dadurch gekennzeichnet, dass** der Plasmagenerator (11) stromaufseitig oder stromabseitig des Filters (4) angeordnet ist.

4. Heizungs-/Klimatisierungssystem nach Anspruch 2, **dadurch gekennzeichnet, dass** der Plasmagenerator (11) in den Filter (4) integriert ist.

5. Heizungs-/Klimatisierungssystem nach Anspruch 3 oder 4, **dadurch gekennzeichnet, dass** der Plasmagenerator (11) umfasst:
- eine Reihe von Hochspannungselektroden (110), die mit einem Hochspannungsgenerator (13) elektrisch verbunden sind, wobei die Elektroden in einer Ebene parallel gestapelt sind, und
- ein Metallgitter (111), das die Masseelektrode bildet und sich in einer Ebene parallel zu der Ebene erstreckt, die die Hochspannungselektroden (110) enthält.

6. Heizungs-/Klimatisierungssystem nach Anspruch 3 oder 4, **dadurch gekennzeichnet, dass** der Plasmagenerator (11) umfasst:
- eine Reihe von Hochspannungselektroden (110), die mit einem Hochspannungsgenerator (13) elektrisch verbunden sind, wobei die Elektroden in einer Ebene parallel gestapelt sind, und
- eine Reihe von Masseelektroden, die jeweils aus einem mit Masse elektrisch verbundenen Leiterdraht, der von einer Isolierhülle umgeben ist, gebildet sind, wobei jede Masseelektrode in derselben Ebene wie die Hochspannungselektroden zwischen zwei Hochspannungselektroden angeordnet ist.

7. Heizungs-/Klimatisierungssystem nach Anspruch 5 oder 6, **dadurch gekennzeichnet, dass** der Plasmagenerator (11) wenigstens eine erste Hochspannungselektrode, die sich parallel zu der Oberfläche einer unteren Zone des Filters erstreckt, eine zweite Hochspannungselektrode, die sich parallel zu der Oberfläche einer oberen Zone des Filters erstreckt, und eine dritte Hochspannungselektrode, die sich parallel zu der Oberfläche einer mittleren Zone des Filters erstreckt, umfasst.

8. Heizungs-/Klimatisierungssystem nach einem der vorhergehenden Ansprüche, **dadurch gekennzeichnet, dass** das Steuermodul (12) dazu ausgelegt ist, ein Signal einer Vorrichtung für die Detektion des Vorhandenseins eines Lebewesens im Inneren des Fahrgastraums zu empfangen und den Betrieb des Plasmagenerators (11) und sogar den Regenerationsbetrieb zu verhindern, falls die Anwesenheit eines Lebewesens detektiert wird.

9. Heizungs-/Klimatisierungssystem nach einem der vorhergehenden Ansprüche, **dadurch gekennzeichnet, dass** das Steuermodul (12) das Schließen von Verschlussklappen (8), die auf Höhe der Belüftungsöffnungen (5, 7) angeordnet sind, wenigstens während der Dauer des Betriebs des Plasmagenerators (11) automatisch steuern kann.

10. Verfahren zum Steuern eines Heizungs-/Klimatisierungssystems eines Kraftfahrzeugs nach einem der Ansprüche 1-9, wobei das Verfahren **dadurch gekennzeichnet ist, dass** es über das Steuermodul (12) den Betrieb des Systems in einer so genannten Betriebsart für die Regeneration des Filters gemäß den folgenden Schritten steuert:
- Detektion des Ausschaltens des Kraftfahrzeugs;
- Starten des Betriebs des Plasmagenerators (11) •

11. Steuerverfahren nach Anspruch 10, **dadurch gekennzeichnet, dass** es außerdem einen Schritt des Steuerns der Luftpulsiereinrichtung (3) umfasst, um eine Strömung (9') von Luft in der Leitung von dem Inneren des Fahrgastraums in die äußere Umgebung des Fahrzeugs wenigstens am Ende des Regenerationsbetriebs zu ermöglichen.

## Claims

1. Heating/air-conditioning system for a motor vehicle, comprising a casing (1) forming a duct for the circulation of air between the outside of the vehicle and a plurality of ventilation openings (5, 7) opening out inside the passenger compartment, inside which are arranged at least one air pulser (3), an evaporator (2), and a plasma generator (11), the system also comprising a control module (12) able to initiate the operation of the air pulser (3) and of the evaporator (2) when the system is in a first so-called cooling mode to enable the air flowing in the duct from the outside to the inside of the passenger compartment to be cooled and an adsorbent filter (4) upstream of the evaporator (2), said filter comprising zeolites which can be regenerated by ozone, **characterized in that** the plasma generator (11) is positioned as close as possible to said filter, **and in that** the control module (12) is able to initialize, when the motor vehicle is no longer switched on, a so-called regeneration operating mode for regenerating the filter (4) of the system, in which the control module (12) initiates the operation of the plasma generator (11) **and in that** the control module (12) also controls said air pulser (3) to allow for a flow (9') of air in said duct from the inside of the passenger compartment to the outside of the vehicle, at least at the end of the regeneration mode, so as to facilitate the desorption of the filter (4) .

2. Heating/air-conditioning system according to any of the preceding claims, **characterized in that** the plasma generator (11) is of the Dielectric Barrier Discharge type.

3. Heating/air-conditioning system according to Claim 2, **characterized in that** the plasma generator (11) is placed upstream or downstream of the filter (4).

4. Heating/air-conditioning system according to Claim 2, **characterized in that** the plasma generator (11) is incorporated in the filter (4).

5. Heating/air-conditioning system according to Claim 3 or 4, **characterized in that** the plasma generator (11) comprises:
- a series of high-voltage electrodes (110) electrically connected to a high-voltage generator (13), the electrodes being stacked parallel in a plane, and
- a metal grating (111) forming the ground electrode, extending in a plane parallel to the plane containing the high-voltage electrodes (110) .

6. Heating/air-conditioning system according to Claim 3 or 4, **characterized in that** the plasma generator (11) comprises:
- a series of high-voltage electrodes (110) electrically connected to a high-voltage generator (13), the electrodes being stacked parallel in a plane, and
- a series of ground electrodes each consisting of a conductive wire electrically connected to the ground and surrounded by an insulating sheath, each ground electrode being placed in the same plane as the high-voltage electrodes, between two high-voltage electrodes.

7. Heating/air-conditioning system according to Claim 5 or 6, **characterized in that** the plasma generator (11) comprises at least one first high-voltage electrode extending parallel to the surface of a bottom area of the filter, a second high-voltage electrode extending parallel to the surface of a top area of the filter, and a third high-voltage electrode extending parallel to the surface of a central area of the filter.

8. Heating/air-conditioning system according to any one of the preceding claims, **characterized in that** the control module (12) is designed to receive a signal from a device for detecting the presence of a living being inside the passenger compartment, and to prevent the operation of the plasma generator (11), even of the regeneration mode, if the presence of a living being is detected.

9. Heating/air-conditioning system according to any one of the preceding claims, **characterized in that** the control module (12) is able to automatically control the closure of shutters (8) arranged at the ventilation openings (5, 7) at least while the plasma generator (11) is operating.

10. Method of controlling a heating/air-conditioning system of a motor vehicle according to any one of Claims 1 to 9, the method being **characterized in that,** it controls, via the control module (12), the operation of the system in a so-called regeneration mode for regenerating said filter according to the following steps:
- detection of the motor vehicle being switched off;
- initiation of the operation of the plasma generator (11).

11. Control method according to Claim 11, **characterized in that** it also comprises a step for controlling said air pulser (3) to allow air to flow (9') in said duct from the inside of the passenger compartment to the outside of the vehicle, at least at the end of the regeneration mode.
